# EUROPÄISCHE PATENTSCHRIFT

(11) **EP 1 307 370 B1**
(45) Veröffentlichungstag und Bekanntmachung des Hinweises auf die Patenterteilung: **16.06.2004**
(21) Anmeldenummer: 01964855.9
(22) Anmeldetag: 25.07.2001
(51) Int. Cl.: B60T 8/40, F04B 17/03, H02K 7/08, H02K 5/173

(54) **PUMPENAGGREGAT FÜR EINE HYDRAULISCHE FAHRZEUGBREMSANLAGE**
PUMP AGGREGATE FOR A HYDRAULIC VEHICLE BRAKING SYSTEM
ENSEMBLE POMPE POUR UN SYSTEME DE FREINAGE HYDRAULIQUE DE VEHICULE

(30) Priorität: 29.07.2000 DE 10037022; 30.06.2001 DE 10131804; 30.06.2001 DE 10131805
(43) Veröffentlichungstag der Anmeldung: 07.05.2003
(73) Patentinhaber: ROBERT BOSCH GMBH, 70442 Stuttgart (DE)
(72) Erfinder: SIEGEL, Heinz, 70435 Stuttgart (DE); ALAZE, Norbert, 71706 Markgroeningen (DE); MERKLEIN, Dieter, 87435 Kempten (DE); SCHLITZKUS, Michael, 87463 Dietmannsried (DE); WEH, Andreas, 87471 Durach (DE); BAREISS, Alexander, 87509 Immenstadt (DE)
(86) Internationale Anmeldenummer: PCT/DE2001/002812
(87) Internationale Veröffentlichungsnummer: WO 2002/009991

(56) Entgegenhaltungen:
- EP-A- 0 682 397
- WO-A-00/77396
- WO-A-00/79144
- WO-A-94/27045
- WO-A-96/19031
- WO-A-97/39514
- WO-A-98/07985
- WO-A-98/17514
- WO-A-98/53202
- DE-A- 4 027 564
- DE-A- 19 524 953
- DE-A- 19 805 003
- DE-A- 19 849 669
- DE-C- 19 809 571
- DE-U- 29 606 135
- US-A- 3 740 829

## Beschreibung

Die Erfindung betrifft ein Pumpenaggregat für eine hydraulische Fahrzeugbremsanlage nach dem Oberbegriff des Anspruchs 1, wie es aus der EP 0 682 397 A bekannt ist.

Bei dem bekannten Pumpenaggregat ist der Außenring des die Rotorwelle auf der der Pumpenseite zugewandten Seite führenden Kugellagers radial von einer Öffnung des topfförmigen Motorgehäuses umfasst. Dazu ist in dem Boden des Motorgehäuses eine Stufe ausgebildet, in welcher der Außenring mit einem Teil seiner Länge über einen Schiebesitz anliegt. Ferner liegt der Boden des Motorgehäuses flächig an einer stufenförmigen Ausnehmung des Pumpengehäuses an.

Aufgabe der Erfindung ist es, das bekannte Pumpenaggregat derart weiterzubilden, dass während des Betriebs des Pumpenaggregats Schwingungen des Pumpengehäuses im Bereich der Aufnahme des Kugellagers vermieden werden, welche neben unerwünschten Geräuschemissionen auch ggf. zu einer Beschädigung des mit dem Pumpengehäuse verbundenen Kugellagers führen können. Weiterhin soll eine fertigungstechnisch einfache und sichere Aufnahme des Kugellagers in dem Gehäuse ermöglicht werden.

Diese Aufgabe wird mit den kennzeichnenden Merkmalen des Anspruchs 1 gelöst. Vorteilhafte Weiterbildungen des erfindungsgemäßen Pumpenaggregats sind in den Unteransprüchen angegeben.

### Zeichnung

Die Erfindung wird nachfolgend anhand von sechs in der Zeichnung dargestellten Ausführungsbeispielen erläutert. Die sechs Figuren zeigen Ausschnitte von sechs Ausführungsbeispielen von Pumpenaggregaten.

### Beschreibung der Ausführungsbeispiele

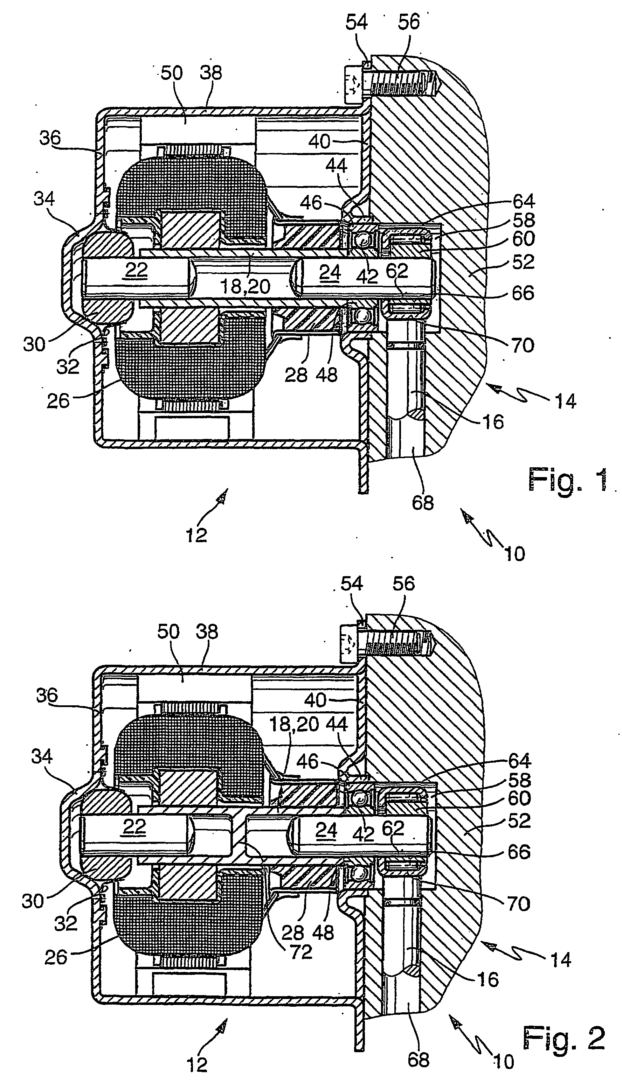

Das in Figur 1 dargestellte, insgesamt mit 10 bezeichnete, nicht beanspruchte Pumpenaggregat weist einen Elektromotor 12 und eine als Radialkolbenpumpe 14 ausgebildete Pumpe auf, die mit dem Elektromotor 12 antreibbar ist. Die Radialkolbenpumpe 14 weist zwei Pumpenkolben 16 auf, die in Boxeranordnung, d. h. einander gegenüberliegend, angeordnet sind. Die in der Zeichnung gezeigte Schnittdarstellung ist an einer gedachten Mittelachse des Pumpenaggregats 10 um 90° abgewinkelt, so dass nur einer der beiden Pumpenkolben 16 sichtbar ist.

Das Pumpenaggregat 10 weist eine Rotorwelle 18 auf, die zugleich eine Motorwelle des Elektromotors 12 bildet. Die Rotorwelle 18 weist eine Hohlwelle 20 auf, in deren beide Enden Stifte 22, 24 eingepresst sind. Durch das Einpressen sind die Stifte 22, 24 drehfest und axialfest mit der Hohlwelle 20 zur Rotorwelle 18 verbunden. Die. Hohlwelle 20 ist aus einem Stück Präzisionsstahlrohr abgetrennt und im Übrigen nicht bearbeitet. Die beiden Stifte 22, 24 sind genormte, gehärtete Zylinderstifte, d. h. Massenware. Die Stifte 22, 24 sind auf einem Teil ihrer Länge in die Hohlwelle 20 eingepresst, sie stehen aus der Hohlwelle 20 vor.

Auf der Hohlwelle 20 sind drehfest ein Anker 26 mit Ankerwicklungen sowie ein Komutator 28 des Elektromotors 12 angebracht.

Die beiden in die Hohlwelle 20 eingepressten Stifte 22, 24 bilden Lagerstellen der Rotorwelle 18, an denen die Rotorwelle 18 drehbar gelagert ist: An einem der Radialkolbenpumpe 14 fernen Ende ist die Rotorwelle 18 mit ihrem aus der Hohlwelle 20 vorstehenden Stift 22 drehbar in einer Lagerbuchse 30 aus Sintermetall gelagert. Das Sintermetall der Lagerbuchse 30 weist eine Porösität auf und ist mit einem Lageröl getränkt, so dass die Lagerbuchse 30 eine Dauerschmierung aufweist. Der gehärtete Stift 22 weist eine ausreichende Oberflächenhärte und Oberflächengüte zur Gleitlagerung in der Lagerbuchse 30 mit geringer Reibung und vernachlässigbarem Verschleiß auf.

Die Lagerbuchse 30 ist mit einer ringförmigen Federklammer 32 in einer Lageraufnahme 34 gehalten. Die Lageraufnahme 34 ist als Auswölbung in einem Boden 36 eines topfförmigen Motorgehäuses 38 ausgebildet. Die Federklammer 32 ist mit dem Boden 36 des Motorgehäuses 38 vernietet. Die Federklammer 32 hält die Lagerbuchse 30 schwenkbar in der Lageraufnahme 34, so dass ein Winkelfluchtungsfehler der Rotorwelle 18 selbsttätig ausgeglichen wird, die Lagerbuchse 30 richtet sich selbsttätig fluchtend zur Rotorwelle 18 aus.

Das topfförmige Motorgehäuse 38 ist an einer offenen Stirnseite mit einem lochscheibenförmigen Gehäusedeckel 40 verschlossen, in dessen Loch als weiteres Lager ein Kugellager 42 eingepresst ist. Durch BordeIn ist ein Rand des Lochs im Gehäusedeckel 40 zu einem zylindrischen Kragen geformt, der einen Lagersitz 44 für das Kugellager 42 bildet, in den ein Außenring 46 des Kugellagers 42 eingepresst ist. Ein Innenring 48 des Kugellagers 42 ist auf den Stift 24 aufgepresst, der in ein pumpenseitiges Ende der Hohlwelle 20 aus der Hohlwelle 20 vorstehend eingepresst ist. Mit dem Kugellager 42 ist die Rotorwelle 18 an ihrem pumpenseitigen Ende drehbar gelagert, der Stift 24 bildet eine Lagerstelle der Rotorwelle 18. Eine Gesamtlänge der Rotorwelle 18 wird durch eine Einpresstiefe der beiden Stifte 22, 24 in die Enden der Hohlwelle 20 eingestellt.

An einem Innenumfang des topfförmigen Motorgehäuses sind. Permanentmagnete 50 den Anker 26 umgebend angebracht.

Die Radialkolbenpumpe 14 ist in einem Hydraulikblock untergebracht, der ein Pumpengehäuse 52 bildet. Der Hydraulikblock ist Bestandteil der im Übrigen nicht dargestellten, hydraulischen Fahrzeugbremsanlage. Im Hydraulikblock sind außer der Radialkolbenpumpe 14 weitere, in der Zeichnung nicht dargestellte, hydraulische Bauelemente wie Magnetventile, Hydrospeicher und Dämpferkammern untergebracht und hydraulisch miteinander verschaltet. Die nicht dargestellten hydraulischen Bauelemente dienen in an sich bekannter Weise einer Blockierschutz-, Antriebsschlupf- und evtl. einer Fahrdynamikregelung, die Radialkolbenpumpe 14 ist zum Fördern von Bremsflüssigkeit in der hydraulischen Fahrzeugbremsanlage vorgesehen. Von dem das Pumpengehäuse 52 bildenden Hydraulikblock ist in der Zeichnung der klaren Darstellung wegen lediglich ein die Radialkolbenpumpe 14 umgebendes Bruchstück dargestellt.

Zur Verbindung des Elektromotors 12 mit dem Pumpengehäuse 52 zum Pumpenaggregat 10 weist das Motorgehäuse 38 einen nach außen umgeformten Radialflansch 54 an seiner offenen Stirnseite auf, mit dem das Motorgehäuse 38 am Pumpengehäuse 52 anliegt und mittels Schrauben 56 mit dem Pumpengehäuse 52 verschraubt ist. Die Schrauben 56 sind zwischen den beiden Pumpenkolben 16 in das Pumpengehäuse 52 eingeschraubt Durch den abgewinkelten Schnitt ist in der Zeichnung sowohl ein Pumpenkolben 16 als auch eine Schraube 56 sichtbar, die sich tatsächlich in zueinander winkelversetzten, gedachten Axialebenen des Pumpenaggregats 10 befinden.

Der pumpenseitige Stift 24 der Rotorwelle 18 ragt durch das Kugellager 42 hindurch, er ragt bis in ein zylindrischen Exzenterraum 58, der koaxial zum Elektromotor 12 und zur Rotorwelle 18 im Pumpengehäuse 52 angebracht ist. Auf ein freies, aus dem Kugellager 42 vorstehendes Ende des Stifts 24 ist eine Exzenterbuchse 60 drehfest aufgepresst. Die Exzenterbuchse 60 bildet ein Exzenterelement zum Antrieb der Radialkolbenpumpe 14. Die Exzenterbuchse 60 weist eine Zylinderbohrung 62, mit der sie auf den Stift 24 aufgepresst ist, sowie eine zylindrische Außenumfangsfläche, die achsparallel und exzentrisch zur. Zylinderbohrung 62 der Exzenterbuchse 60 und damit zur Rotorwelle 18 ist, auf. Die zylindrische Außenumfangsfläche bildet eine Lauffläche 64 für ein Nadellager 66, das auf die Exzenterbuchse 60 aufgesetzt ist. Die Pumpenkolben 16 sind in Pumpenbohrungen 68 axial verschieblich aufgenommen, die radial zur Rotorwelle 18 im Pumpengehäuse 52 angebracht sind und in den Exzenterraum 58 münden. Die Pumpenkolben 16 werden von in der Zeichnung nicht sichtbaren Rückstellfedern gegen einen Lagerring 70 des Nadellagers 66 gedrückt. Die Kolbenrückstellfedern sind Schraubendruckfedern, die auf äußeren, der Exzenterbuchse 60 abgewandten Enden der Pumpenkolben 16 angeordnet sind. Die Exzenterbuchse 60 bildet ein Exzenterelement, das die bei rotierendem Antrieb die Pumpenkolben 16 zu einer axialen Hubbewegung in den Pumpenbohrungen 68 antreibt. Die Hubbewegung der Pumpenkolben 16 bewirkt eine Förderung von Bremsflüssigkeit in von Kolbenpumpen her an sich bekannter Weise.

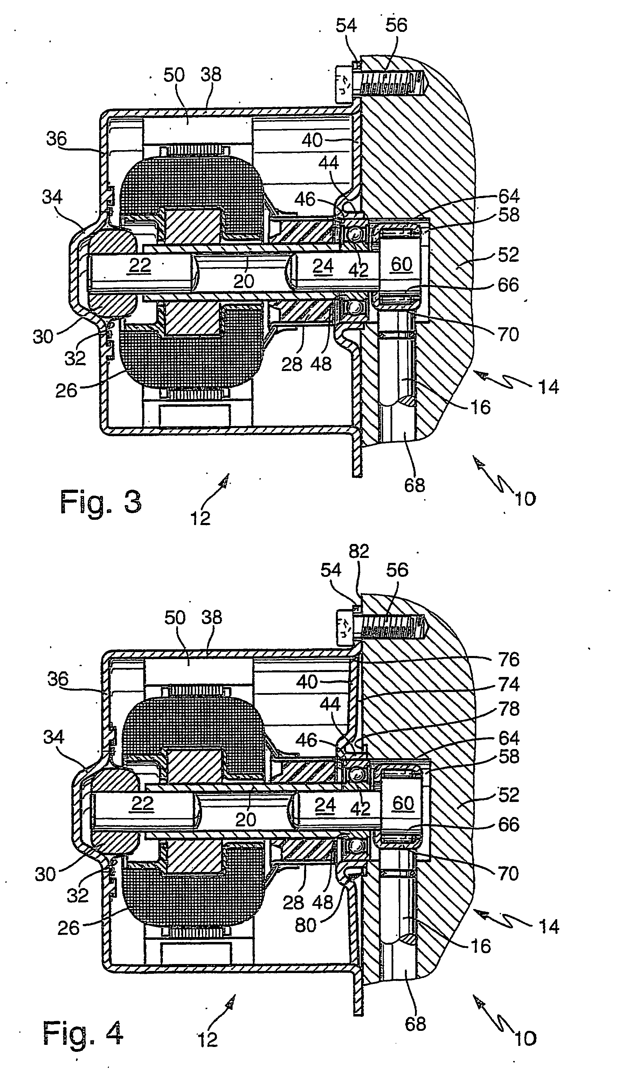

Bei dem in Figur 2 dargestellten, ebenfalls nicht beanspruchten Pumpenaggregat 10 ist die Hohlwelle 20 der Rotorwelle 18 als Kaltschlagteil hergestellt und weist deswegen fertigungsbedingt einen Boden 72 im Bereich einer Längsmitte der Hohlwelle 20 auf. Im Übrigen ist das in Figur 2 dargestellte Pumpenaggregat 10 gleich aufgebaut und funktioniert in gleicher Weise wie das in Figur 1 dargestellte Pumpenaggregat 10. Zur Vermeidung von Wiederholungen wird auf die Ausführungen zu Figur 1 verwiesen.

Bei dem in Figur 3 dargestellten, ebenfalls nicht beanspruchten Pumpenaggregat 10 ist das Exzenterelement 60 einstückig mit dem Stift 24, der in das pumpenseitige Ende der Hohlwelle 20 eingepresst ist. Das Exzenterelement 60 ist mit dem mit ihm einstückigen Stift 24 gemeinsam durch Kaltschlagen hergestellt. Das Exzenterelement 60 ist ein zylindrischer, exzentrisch zum Stift 24 angeordneter Axialabschnitts des Stifts 24. Eine Umfangsfläche des Exzenterelements 60 bildet die Lauffläche 64 für das Nadellager 66 der Radialkolbenpumpe 14. Im Übrigen ist auch das in Figur 3 dargestellte Pumpenaggregat 10 übereinstimmend mit demjenigen aus Figur 1 aufgebaut und funktioniert in gleicher Weise. Zur Vermeidung von Wiederholungen wird auf die entsprechenden Ausführungen zu Figur 1 verwiesen. Für gleiche Bauteile sind in den Zeichnungen gleiche Bezugszahlen verwendet.

Das Ausführungsbeispiel eines ersten erfindungsgemäßen Pumpenaggregats 10 gemäß der Figur 4 unterscheidet sich vom Ausführungsbeispiel gemäß der Figur 1 dadurch, dass ein lochscheibenförmiger Gehäusedeckel 40 flachkegelig dargestellt ist und zwischen dem Pumpengehäuse 52 und dem Gehäusedeckel 40 und dabei radial außerhalb eines nach Art eines zylindrischen Kragens geformten Lagersitzes 44 ein einen Hohlraum freihaltender Spalt 74 vorhanden ist. Hierbei ist eine Weite des Spaltes 74 beim Kugellager 42 größer dargestellt als bei einem Rand 76, der den Gehäusedeckel 40 nach außen begrenzt. Dieser Rand 76 ist wie im Beispiel gemäß der Figur 1 derart ausgebildet, dass er sich formschlüssig im offenen Ende des Motorgehäuses 38 abstützt. Dadurch ist der Gehäusedeckel 40 mittels der Schrauben 56 mittelbar über den Radialflansch 54 und das Motorgehäuse 38 in Richtung des Pumpengehäuses 52 spannbar, so dass der an ihm befindliche Lagersitz 44 in gewollter Weise axial an eine im Pumpengehäuse 52 befindliche Anschlagfläche 78 angedrückt ist. Diese Anschlagfläche 78 ist beispielsweise hergestellt durch Anordnung von einer Bohrungsstufe 80, die von einer elektromotorseitigen Begrenzungsfläche 82 des Pumpengehäuses 52 ausgeht und vorzugsweise zentrisch zum Exzenterraum 58 ausgerichtet ist.

Im noch nicht gemäß der Figur 4 montierten und also noch nicht gegen das Pumpengehäuse 52 gespannten Zustand des Elektromotors 12 ist der lochscheibenförmige Bereich des Gehäusedeckels 40 vorzugsweise eben. Die kegelige Darstellung des Gehäusedeckels 40, die eher qualitativ als quantitativ dargestellt ist, zeigt eine Verformung anläßlich des Zusammenbauens des Elektromotors 12 mit dem Pumpengehäuse 52 und dabei nach dem Festdrehen der Schrauben 56. Bedingt durch die Elastizität des Werkstoffs, hier tiefziehbarer Stahl, hat der Gehäusedeckel 40 eine gewisse Elastizität mit dem Vorteil einer dauerhaften axialen Andrückung des Lagersitzes 44 an das Pumpengehäuse 52. Dadurch ist vermieden, dass der Gehäusedeckel 40 nach Art einer elastischen Membran Schwingungen ausführt, die zur Geräuschabstrahlung und ggf. Beschädigung des Kugellagers 42 führen könnten.

Wie bereits zur Figur 1 beschrieben, ist der Außenrüng 46 des Kugellagers in den Lagersitz 44 eingepreßt. Im Unterschied dazu ist es für ein Einfügen des aus dem Lagersitz 44 vorstehenden Längenabschnitts des Außenringes 46 des Kugellagers 42 günstig, wenn eine in dem Pumpengehäuse 52 zugeordnete Bohrung so gefertigt ist, dass der Außenring 46 mit wenig radialem Spiel in die Bohrung einschiebbar ist. Auf diese Art ist der Elektromotor 12 mit Hilfe des Außenringes 46 leicht zum Pumpengehäuse 52 ausrichtbar und der Außenring 46 leicht einsteckbar, ohne Aufwand an Einpreßarbeit leisten zu müssen.

Es wird darauf hingewiesen, dass das anhand der Figur 4 beschriebene elastische axiale Andrücken des Lagersitzes 44 an die Anschlagfläche 78 des Pumpengehäuses 52 auch weiterbenützbar ist, wenn die zuvor beschriebene Rotorwelle 18 anders als gemäß der Figur 1 und auch anders als gemäß den Figuren 2 und 3 ausgebildet ist. Eine alternativ verwendbare Rotorwelle kann beispielsweise eine Rotorwelle des Standes der Technik sein.

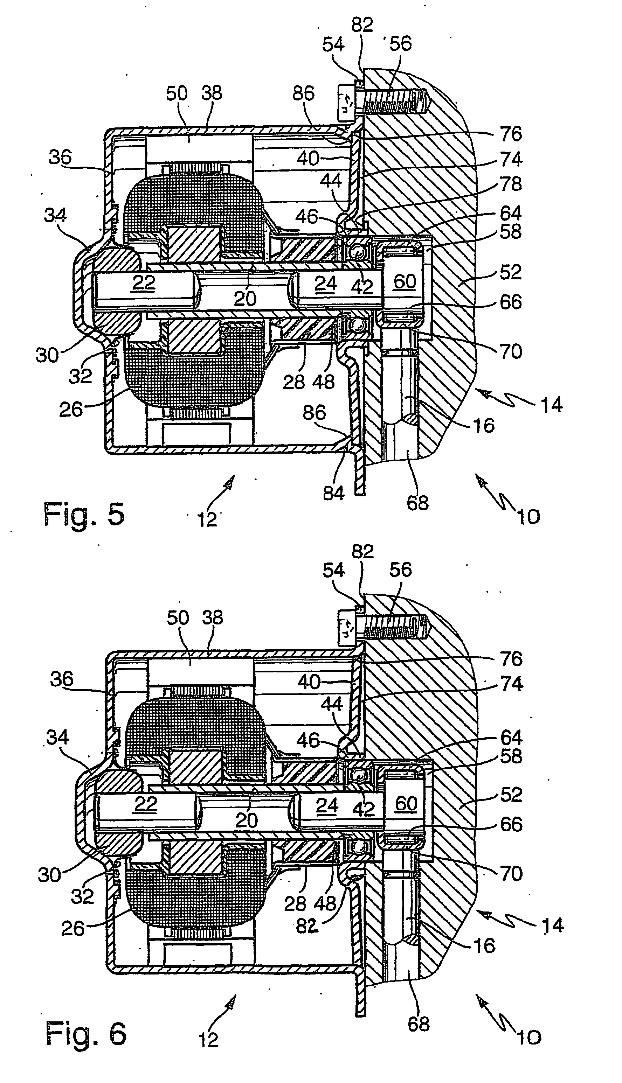

Im erfindungsgemäßen Ausführungsbeispiel gemäß der Figur 5 weist das Motorgehäuse 38 von außen nach innen radiale Eindrückungen 84 und deshalb innerhalb des Motorgehäuses 38 radial nach innen gerichtete Vorsprünge 86 auf. Diese Vorsprünge 86 dienen als formschlüssige Mittel zur zusätzlichen oder alleinigen Übertragung wenigstens eines Teils der mittels der Schrauben 56 erzeugbaren Spannkraft, dank der der Lagersitz 44 axial rüttelsicher an das Pumpengehäuse 52 gedrückt ist. Anstelle der radialen Eindrückungen 84 könnte natürlich auch eine nicht dargestellte rundumlaufende und dabei gegen den Rand 76 des Gehäusedeckels 40 gerichtete Sicke vorgesehen sein.

Voranstehend wurde angedeutet, dass der lochscheibenförmige Bereich des Gehäusedeckels 40 vor dem Zusammenbauen mit dem Pumpengehäuse 52 beispielsweise eben sein kann. Es besteht aber auch die Möglichkeit, den lochscheibenförmigen Bereich dieses Gehäusedeckels 40 kegelig derart herzustellen, dass. er beim Festspannen gegen das Pumpengehäuse eine im Wesentlichen ebene Form erhält.

Das erfindungsgemäße Ausführungsbeispiel gemäß der Figur 6 unterscheidet sich von den Ausführungsbeispielen der Figuren 4 und 5 dadurch, dass das Ausführungsbeispiel gemäß der Figur 6 keine Bohrungsstufe 80 aufweist und dass deshalb der Lagersitz 44 gegen eine elektromotorseitig vorhandene Begrenzungsfläche 82 des Pumpengehäuses 52 angedrückt ist. Dieses Ausführungsbeispiel wird beispielsweise bevorzugt, wenn die Begrenzungsfläche 82 beispielsweise durch maschinelle Bearbeitung ausreichend eben beschaffen ist. Eine Bearbeitung der Begrenzungsfläche 82 kann nämlich deshalb schon vorgesehen sein, weil ein Radialflansch 54 des Motorgehäuses 38 möglichst spaltfrei am Pumpengehäuse 52 anliegen soll.

## Patentansprüche

1. Pumpenaggregat (10) für eine hydraulische Fahrzeugbremsanlage, mit einem Elektromotor (12), der ein topfförmiges Motorgehäuse (38) aufweist, und mit einer Pumpe (14), die mittels des Elektromotors (12) antreibbar und in einem Pumpengehäuse (52) untergebracht ist, wobei das Pumpenaggregat (10) eine Rotorwelle (18) aufweist, die sich vom Motorgehäuse (38) aus durch den Gehäusedeckel (40) und in das Pumpengehäuse (52) erstreckt und mittels eines Kugellagers (42) gelagert ist, dessen Außenring (46) sich einerseits in dem Gehäusedeckel (40) und andererseits im Pumpengehäuse (52) befindet, wobei der Außenring (46) des Kugellagers (42) in einer im Pumpengehäuse (52) vorhandenen Bohrung (58) anliegt und in axialen Richtungen lagegesichert ist, wobei der Gehäusedeckel (40) aus Blech mit einem Lagersitz (44) für den Außenring (46) des Kugellagers (42) hergestellt ist, und wobei der Lagersitz (44) den Außenring (46) des Kugellagers (42) nur auf einen Teil von dessen Länge reibschlüssig umgibt, **dadurch gekennzeichnet, dass** das Motorgehäuse (38) einen in dieses eingesetzten Gehäusedeckel (40) aufweist, dass der Lagersitz (44) nach Art eines zylindrischen Kragens geformt ist, dass ein freies Ende des Lagersitzes (42) zur axialen Anlage an dem Pumpengehäuse (52) bestimmt ist und dass dieses freie Ende mittelbar über den Gehäusedeckel (40) und das Motorgehäuse (38) gegen das Pumpengehäuse (52) gespannt ist.

2. Pumpenaggregat nach Anspruch 1, **dadurch gekennzeichnet, dass** die im Pumpengehäuse (52) befindliche Bohrung (58), die eine Teillänge des Außenringes (46) des Kugellagers (42) aufnimmt, in einer Bohrungsstufe (80) angeordnet ist, die eine axiale Anschlagfläche (78) für das freie Ende des Lagersitzes (44) bildet.

3. Pumpenaggregat nach Anspruch 1 oder 2, **dadurch gekennzeichnet, dass** die Rotorwelle (18) mit einem Exzenter (60) kombiniert ist, und dass ein diesem zugeordneter Lagerring (70) eines Nadellagers (66) an das Kugellager (42) angrenzt, wobei das Kugellager (42) ein axiales Anschlagelement für den Lagerring (70) bildet.

4. Pumpenaggregat nach einem der Ansprüche 1 bis 3, **dadurch gekennzeichnet, dass** die Rotorwelle als Hohlwelle ausgebildet ist, dass in mindestens ein Ende der Hohlwelle (20) ein Stift (22, 24) eingesetzt ist, der mit der Hohlwelle (20) drehfest ist, der zur Hohlwelle (20) koaxial ist, der aus dem Ende der Hohlwelle (20) vorsteht und der eine Lagerstelle bildet, an der die Rotorwelle (18) drehbar gelagert ist.

5. Pumpenaggregat nach Anspruch 4, **dadurch gekennzeichnet, dass** der Stift (22, 24) in die Hohlwelle (20) aus der Hohlwelle (20) vorstehend eingepresst ist.

6. Pumpenaggregat nach Anspruch 4, **dadurch gekennzeichnet, dass** in jedes Ende der Hohlwelle (20) ein Stift (22, 24) aus der Hohlwelle (20) vorstehend eingepresst ist, wobei jeder Stift (22, 24) eine Lagerstelle bildet, an der die Rotorwelle (18) drehbar gelagert ist.

7. Pumpenaggregat nach Anspruch 4, **dadurch gekennzeichnet, dass** der Stift (22, 24) ein genormter Stift (22, 24) ist.

8. Pumpenaggregat nach Anspruch 4, **dadurch gekennzeichnet, dass** die Hohlwelle (20) ein Umformteil ist.

9. Pumpenaggregat nach Anspruch 8, **dadurch gekennzeichnet, dass** die Hohlwelle (20) ein Kaltschlagteil ist.

10. Pumpenaggregat nach einem der vorigen Ansprüche, **dadurch gekennzeichnet, dass** die Pumpe eine Radialkolbenpumpe (14) ist.

11. Pumpenaggregat nach Anspruch 4, **dadurch gekennzeichnet, dass** der Stift (24) einstückig mit einem Exzenterelement (60) ist.

12. Pumpenaggregat nach Anspruch 11, **dadurch gekennzeichnet, dass** der Stift (24) mit Exzenterelement (60) ein Umformteil ist.

13. Pumpenaggregat nach Anspruch 12, **dadurch gekennzeichnet, dass** der Stift (24) mit dem Exzenterelement (60) ein Kaltschlagteil ist.

14. Pumpenaggregat nach Anspruch 11, **dadurch gekennzeichnet, dass** das Exzenterelement (60) einen axialen Abstand vom Ende der Hohlwelle (20) aufweist und dass die Lagerstelle der Rotorwelle (18) zwischen dem Ende der Hohlwelle (20) und dem Exzenterelement (16) angeordnet ist.

## Claims

1. Pump assembly (10) for a hydraulic vehicle brake system, with an electric motor (12) which has a pot-shaped motor housing (38), and with a pump (14) which is capable of being driven by means of the electric motor (12) and is accommodated in a pump casing (52), the pump assembly (10) having a rotor shaft (18) which extends from the motor housing (38) through the housing cover (40) and into the pump casing (52) and is mounted by means of a ball bearing (42), the outer ring (46) of which is located, on the one hand, in the housing cover (40), and, on the other hand, in the pump casing (52), the outer ring (46) of the ball bearing (42) coming to bear in a bore (58) present in the pump casing (52) and being secured in position in axial directions, the housing cover (40) being produced from sheet metal, with a bearing seat (44) for the outer ring (46) of the ball bearing (42), and the bearing seat (44) frictionally surrounding the outer ring (46) of the ball bearing (42) over only part of the length of the said outer ring, **characterized in that** the motor housing (38) has a housing cover (40) inserted into the latter, **in that** the bearing seat (44) is shaped in the manner of a cylindrical collar, **in that** a free end of the bearing seat (44) is intended for coming to bear axially on the pump casing (52), and **in that** this free end is tensioned against the pump casing (52) indirectly via the housing cover (40) and the motor housing (38).

2. Pump assembly according to Claim 1, **characterized in that** the bore (58) which is located in the pump casing (52) and receives a part-length of the outer ring (46) of the ball bearing (42) is arranged in a bore step (80) which forms an axial abutment surface (78) for the free end of the bearing seat (44).

3. Pump assembly according to Claim 1 or 2, **characterised in that** the rotor shaft (18) is combined with an eccentric (60), and **in that** a bearing ring (70), assigned to the latter, of a needle bearing (66) is adjacent to the ball bearing (42), the ball bearing (42) forming an axial abutment element for the bearing ring (70).

4. Pump assembly according to one of Claims 1 to 3, **characterized in that** the rotor shaft is designed as a hollow shaft, **in that** at least one end of the hollow shaft (20) has inserted into it a pin (22, 24) which is fixed in terms of rotation to the hollow shaft (20), which is coaxial to the hollow shaft (20), which projects from the end of the hollow shaft (20) and which forms a bearing point at which the rotor shaft (18) is mounted rotatably.

5. Pump assembly according to Claim 4, **characterized in that** the pin (22, 24) is pressed into the hollow shaft (20) so as to project from the hollow shaft (20).

6. Pump assembly according to Claim 4, **characterized in that** a pin (22, 24) is pressed into each end of the hollow shaft (20) so as to project from the hollow shaft (20), each pin (22, 24) forming a bearing point at which the rotor shaft (18) is mounted rotatably.

7. Pump assembly according to Claim 4, **characterized in that** the pin (22, 24) is a standardized pin (22, 24).

8. Pump assembly according to Claim 4, **characterized in that** the hollow shaft (20) is a formed part.

9. Pump assembly according to Claim 8, **characterized in that** the hollow shaft (20) is a cold-impact stamped part.

10. Pump assembly according to one of the preceding claims, **characterized in** chat the pump is a radial piston pump (14).

11. Pump assembly according to Claim 4, **characterized in that** the pin (24) is in one piece with an eccentric element (60).

12. Pump assembly according to Claim 11, **characterized in that** the pin (24) together with the eccentric element (60) is a formed part.

13. Pump assembly according to Claim 12, **characterized in that** the pin (24) together with the eccentric element (60) is a cold-impact stamped part.

14. Pump assembly according to Claim 11, **characterized in that** the eccentric element (60) is at an axial distance from the end of the hollow shaft (20), and **in that** the bearing point of the rotor shaft (18) is arranged between the end of the hollow shaft (20), and the eccentric element (16).

## Revendications

1. Bloc pompe (10) pour une installation hydraulique de freinage d'un véhicule automobile, comprenant un moteur électrique (12) monté dans un boîtier de moteur (38) en forme de pot, pour entraîner une pompe (14) montée dans un boîtier de pompe (52), ce bloc de pompe (10) présentant un arbre de rotor (18) qui, sortant du boîtier de moteur (38) à travers un couvercle de boîtier (40) pénètre dans le boîtier de pompe (52) où il est monté dans un roulement à billes (42) dont la bague externe (46) se trouve d'un côté dans le couvercle de boîtier (40) et de l'autre côté dans le boîtier de pompe (52), cette bague (46) étant logée dans un alésage (58) du boîtier de pompe (52) avec sécurisation de position en direction axiale tandis que, du côté du couvercle du boîtier (40) réalisé en tôle avec un siège de roulement (44), elle est logée dans ce siège (44) qui l'entoure avec blocage par friction seulement sur une partie de sa longueur,
**caractérisé en ce que**
le boîtier de moteur (38) présente, inséré en lui, un couvercle de boîtier (40), le siège de roulement (44) a la forme d'un collet cylindrique dont une extrémité libre est définie pour assurer un appui axial sur le boîtier de pompe (52), cette extrémité étant appliquée sur le boîtier de pompe (52) indirectement par l'intermédiaire du couvercle du boîtier (40) et du boîtier du moteur (38).

2. Bloc pompe selon la revendication 1,
**caractérisé en ce que**
l'alésage (58) prévu dans le boîtier de pompe (52) pour accueillir une partie de la longueur de la bague externe (46) du roulement à billes (42) est une partie étagée d'un alésage (80) qui constitue une portée axiale de butée (78) pour l'extrémité libre du siège de roulement (44).

3. Bloc pompe selon la revendication 1 ou 2,
**caractérisé en ce que**
l'arbre de rotor (18) est combiné à un excentrique (60) auquel est associé un roulement à aiguilles (66) comportant une bague (70) située en limite du roulement à billes (42) qui constitue ainsi un élément de butée axiale pour la bague (70).

4. Bloc pompe selon l'une des revendications 1 à 3,
**caractérisé en ce que**
l'arbre du rotor est un arbre creux (20) avec, inséré dans au moins une de ses extrémités, une broche (22, 24) solidaire en rotation de l'arbre creux (20), coaxiale à cet arbre qu'elle dépasse en formant une zone de palier par laquelle l'arbre du rotor (18) est monté en rotation.

5. Bloc pompe selon la revendication 4,
**caractérisé en ce que**
la broche (22, 24) est montée à force et en saillie dans l'arbre creux (20).

6. Bloc pompe selon la revendication 4,
**caractérisé en ce que**
dans chaque extrémité de l'arbre creux (20) est insérée à force et en saillie une broche (22, 24) qui constitue une zone de palier par laquelle l'arbre de rotor (18) est monté en rotation.

7. Bloc pompe selon la revendication 4,
**caractérisé en ce que**
la broche (22, 24) est une broche normalisée.

8. Bloc pompe selon la revendication 4,
**caractérisé en ce que**
l'arbre creux (20) est une pièce réalisée par formage.

9. Bloc pompe selon la revendication 8,
**caractérisé en ce que**
l'arbre creux (20) est réalisé par frappe à froid.

10. Bloc pompe selon l'une des revendications précédentes,
**caractérisé en ce que**
la pompe est une pompe à piston radial (14).

11. Bloc pompe selon la revendication 4,
**caractérisé en ce que**
la broche (24) est monobloc avec un élément d'excentrique (60).

12. Bloc pompe selon la revendication 11,
**caractérisé en ce que**
la broche (24) est réalisée avec l'élément d'excentrique (6) par formage.

13. Bloc pompe selon la revendication 12,
**caractérisé en ce que**
la broche (24) avec l'élément d'excentrique (60) est réalisée par frappe à froid.

14. Bloc pompe selon la revendication 11,
**caractérisé en ce que**
l'élément d'excentrique (60) est situé à une certaine distance de l'extrémité de l'arbre creux (20) et la zone de palier de l'arbre du rotor (18) se trouve entre l'extrémité de l'arbre creux (20) et l'élément d'excentrique (60).
